(19) Europäisches Patentamt
European Patent Office
Office européen des brevets

(11) **EP 4 568 323 A1**

(12) **EUROPEAN PATENT APPLICATION**
published in accordance with Art. 153(4) EPC

(43) Date of publication:
**11.06.2025 Bulletin 2025/24**

(21) Application number: **22954037.2**

(22) Date of filing: **04.08.2022**

(51) International Patent Classification (IPC):
**H04W 24/04** *(2009.01)*    **H04W 16/18** *(2009.01)*

(52) Cooperative Patent Classification (CPC):
**H04W 16/18; H04W 24/04**

(86) International application number:
**PCT/JP2022/030017**

(87) International publication number:
**WO 2024/029049 (08.02.2024 Gazette 2024/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NIPPON TELEGRAPH AND TELEPHONE CORPORATION**
**Chiyoda-ku, Tokyo 100-8116 (JP)**

(72) Inventors:
• **IWAMOTO, Masayoshi**
  **Musashino-shi, Tokyo 180-8585 (JP)**
• **SUZUKI, Akito**
  **Musashino-shi, Tokyo 180-8585 (JP)**
• **KOBAYASHI, Masahiro**
  **Musashino-shi, Tokyo 180-8585 (JP)**

(74) Representative: **Murgitroyd & Company**
**165-169 Scotland Street**
**Glasgow G5 8PL (GB)**

(54) **CONTROL METHOD, CONTROL DEVICE, WIRELESS COMMUNICATION SYSTEM, AND PROGRAM**

(57)    A control method executed by a control apparatus that determines a relief antenna for relieving communication in a failure area and a tilt of the relief antenna, the control method including acquiring an antenna sequence in which a plurality of antennas are arranged in descending order of priority in accordance with a policy function, and selecting the antennas as relief antennas in order from a head of the antenna sequence until a predetermined condition is satisfied, and calculating tilts of the relief antennas selected in the selecting of the relief antennas.

Fig. 6

EP 4 568 323 A1

Processed by Luminess, 75001 PARIS (FR)

## Description

Technical Field

The present invention relates to a technique for relieving an area in which communication is disabled due to trouble of a wireless base station in a mobile communication network.

Background Art

When trouble occurs in a wireless base station due to natural disaster or the like, a communication failure occurs in an area covered by the base station. Since high availability is required for wireless communication, recovery is required to be performed in a short period of time of approximately several minutes.

On the other hand, there is a technique for performing recovery from a failure by changing a depression angle (tilt) of an antenna of a base station around an area where a failure has occurred (failure area) and covering (relieving) the failure area. This technique is referred to as Cell Outage Compensation (COC).

Citation List

Non Patent Literature

NPL 1: W. Li et al., "Automated cell outage compensation mechanism based on downtilt adjustments in cellular networks," in ISCIT, 2016, pp. 1-6.

NPL 2: M. Yin et al., "Cell outage compensation based on CoMP and optimization of tilt," J. China Univ. Posts Telecommun., vol. 22, No. 5, p. 71-79, 2015.

Summary of Invention

Technical Problem

As a conventional technique for relieving a failure area, there is a conventional technique based on COC (NPL 1 and NPL 2). However, these conventional techniques have a problem that, when a failure area occurs due to trouble or the like of a wireless base station, it is not possible to select an appropriate relief antenna according to a situation.

The present invention has been made in view of the above-described points, and an object thereof is to provide a technique that makes it possible to select an appropriate relief antenna according to a situation when a failure area occurs due to trouble or the like of a wireless base station.

[Solution to Problem]

According to the disclosed technique, there is provided a control method executed by a control apparatus that determines a relief antenna for relieving communication in a failure area and a tilt of the relief antenna, the control method including acquiring an antenna sequence in which a plurality of antennas are arranged in descending order of priority in accordance with a policy function, and selecting the antennas as relief antennas in order from a head of the antenna sequence until a predetermined condition is satisfied, and
calculating tilts of the relief antennas selected in the selecting of the relief antennas.

Advantageous Effects of Invention

According to the disclosed technique, there is provided a technique that makes it possible to select an appropriate relief antenna according to a situation when a failure area occurs due to trouble or the like of a wireless base station.

Brief Description of Drawings

[Fig. 1] Fig. 1 is a configuration diagram of a system according to an embodiment of the present invention.
[Fig. 2] Fig. 2 is a configuration diagram of a wireless base station control apparatus.

[Fig. 3] Fig. 3 is a diagram showing $d_{max}$ and $d_{min}$.

[Fig. 4] Fig. 4 is a diagram showing two sectors.

[Fig. 5] Fig. 5 is a flowchart for describing operations of the wireless base station control apparatus.

[Fig. 6] Fig. 6 is a flowchart for describing operations of the wireless base station control apparatus.

[Fig. 7] Fig. 7 is a diagram showing a hardware configuration example of the device.

Description of Embodiments

Hereinafter, an embodiment of the present invention (the present embodiment) will be described with reference to the accompanying drawings. An embodiment to be described below is an example, and an embodiment to which the present invention is applied is not limited to the following embodiment.

(Definition of Terms)

First, the definition of "antenna" and "local mesh" used in the present specification will be described.

(1) Antenna

A base station is constituted by a plurality of antennas, and each of the antennas takes charge of a communication cover in a specific azimuth. At this time, a tilt is set for each antenna, and when the tilt is different, a covered area is also different.

Since there is a case in which only some antennas of the base station have trouble, troubles in units of antennas rather than troubles in units of base stations are considered in the present embodiment.

(2) Local mesh

A local mesh is obtained by "dividing an area into mesh cells having substantially the same size based on the latitude and longitude" defined by the administrative government office (now, Ministry of Internal Affairs and Communications). In the present embodiment, the local mesh is referred to as a mesh.

In the present embodiment, all areas such as a failure area and a covered area using a relief antenna are considered in units of meshes.

There are a plurality of patterns of area with respect to a mesh, and it is assumed that those with a large area have a coarse mesh granularity. As an example, there are a reference mesh (the length of one side is approximately 1 km), a 1/2 mesh (the length of one side is approximately 500 m), a 1/8 mesh (the length of one side is approximately 125 m), and the like.

The coarser the granularity of the mesh is, the smaller a calculation amount required for calculating the covered area is, and a period of time required for estimating the covered area can be shortened. The granularity of the mesh can be determined in advance, for example, by an operator of a wireless base station control apparatus 100 in the present embodiment.

(Regarding Problems)

Here, conventional techniques and problems thereof for the technique according to the present embodiment will be described in detail. In the following description, contents disclosed in NPL 1 and NPL 2 are known, but the content of description of the problems thereof are not known.

First, COC, which is the basis of the techniques disclosed in NPL 1 and NPL 2, will be explained. The COC is constituted by the following two steps.

<Relief Antenna Selection Step>

First, an antenna to be used for relief is selected from among antennas available around a failure area. This step is referred to as a relief antenna selection step, and the selected antenna is referred to as a relief antenna. In the relief antenna selection step, an antenna having a high likelihood of being able to cover a failure area is selected by a predetermined algorithm.

<Tilt Optimization Step>

Next, a tilt of a relief antenna is optimized. This step is referred to as a tilt optimization step. In the tilt optimization step, the tilt of the relief antenna is controlled so that a high cover rate is obtained for a failure area and overlapping of covered areas of relief antennas is reduced.

(1) Conventional Technique and Problem 1 Thereof

A COC method for maximizing the number of user connections in a failure area has been proposed in NPL 1. In this method, all antennas adjacent to the failure area are selected as relief antennas. For this reason, the number of relief antennas becomes excessive, and a solution space to be searched for becomes large when optimizing a tilt of the relief antenna.

As a result, the accuracy of an optimum solution is lowered, and there is a possibility that overlapping of covered areas will occur between the relief antennas. The overlapping of the covered areas causes radio wave interference, leading to deterioration of communication quality.

The size of the failure area and arrangement of the antennas vary depending on a situation, and it is necessary to select an appropriate antenna for each situation. For example, it is not necessary to control tilts of all of the antennas for relieving a small-sized failure area. However, according to the technique disclosed in NPL 1, it is not possible to select an appropriate antenna according to a situation.

(2) Conventional Technique and Problem 2 Thereof

According to the method disclosed in NPL 2, ten patterns of combinations of relief antennas are prepared in advance among antennas adjacent to a failure area, an optimized tilt is obtained by each of the patterns, and a best solution is adopted among them.

In this method, unlike the method disclosed in NPL 1, an appropriate relief antenna is selected from among the antennas around the failure area. However, this method is based on the assumption that the antennas are arranged in a grid shape at equal intervals, only trouble of a single antenna is assumed, and an appropriate antenna cannot be selected for a failure area extending over a plurality of antennas.

(3) Conventional Technique and Problem 3 Thereof

According to the method disclosed in NPL 2, an optimum solution is calculated in advance for a combination of a plurality of relief antennas. However, in a large-sized failure area extending over a plurality of antennas, a combination of relief antennas becomes huge, and it is difficult to calculate an optimum solution for each of all combinations in advance.

(Features (points) of Technique According to Embodiment)

In the technique according to the present embodiment, in order to solve the above-described problems, the wireless base station control apparatus 100, which will be described later, selects an appropriate relief antenna from among antennas of peripheral base stations for the purpose of covering a failure area due to trouble of the base stations, or the like, and then controls a tilt of the selected antenna. According to the technique according to the present embodiment, the above-described problems can be solved by particularly providing the following features (points). The points to be described below are points in the technique according to the embodiment, and it is not essential to include all of the points as the invention.

<Point 1>

A relief antenna is selected from among antennas around a failure area based on a positional relationship such as a distance between each of the antennas and the failure area and an azimuth of the failure area in a coordinate system of each of the antennas.

<Point 2>

A combination optimization method based on Deep Reinforcement Learning (DRL) is used to select a relief antenna, and an appropriate relief antenna is obtained from a huge combination of relief antennas with a small calculation amount. In the present embodiment, it is possible to use a reinforcement learning technique aside from deep reinforcement learning.

(Effects in Technique According to Embodiment)

According to the technique according to the present embodiment having the above-described points, the following effects are exhibited.

<Effect 1>

According to the point 1, it is possible to prevent the overlapping of the covered areas of the selected relief antennas described in the problem 1.

<Effect 2>

According to the point 1, it is possible to select a relief antenna without depending on restrictions on arrangement of adaptable antennas and a failure pattern. Thereby, it is possible to relieve a failure across a plurality of antennas and to solve the problem 2.

<Effect 3>

According to the point 2, an appropriate relief antenna is obtained in a practical period of time without previously calculating an optimum solution of a tilt for each of all combinations of the relief antennas. Thereby, the problem 3 can be solved.

(Overall Configuration of System)

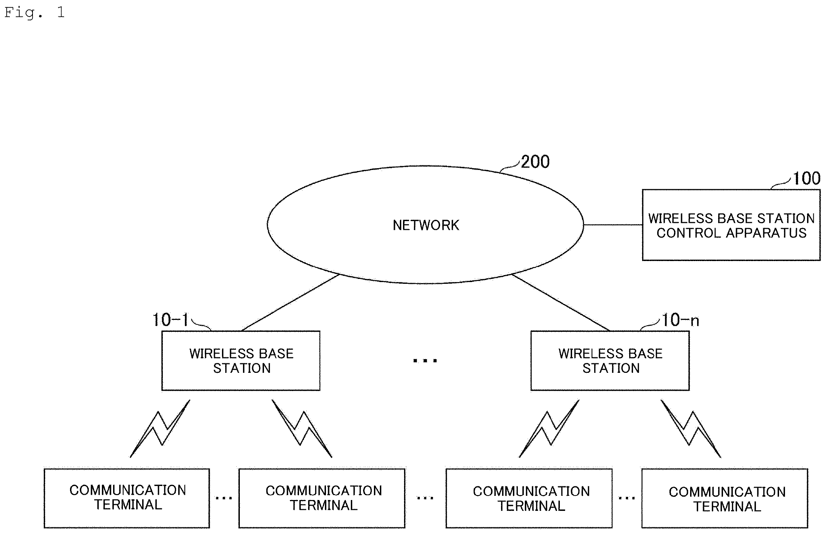

Fig. 1 shows an example of an overall configuration of a wireless communication system according to the present embodiment. As shown in Fig. 1, the system according to the present embodiment has a configuration in which a plurality of wireless base stations 10 and the wireless base station control apparatus 100 are connected to a network 200. The network 200 is, for example, a network that includes a mobile core network. A communication terminal is present under each of the wireless base station, and the communication terminals communicate with the wireless base stations in a wireless manner.

Hereinafter, a configuration and operations of the wireless base station control apparatus 100 according to the present embodiment will be described in detail.

(Configuration Example of Wireless base station control apparatus 100)

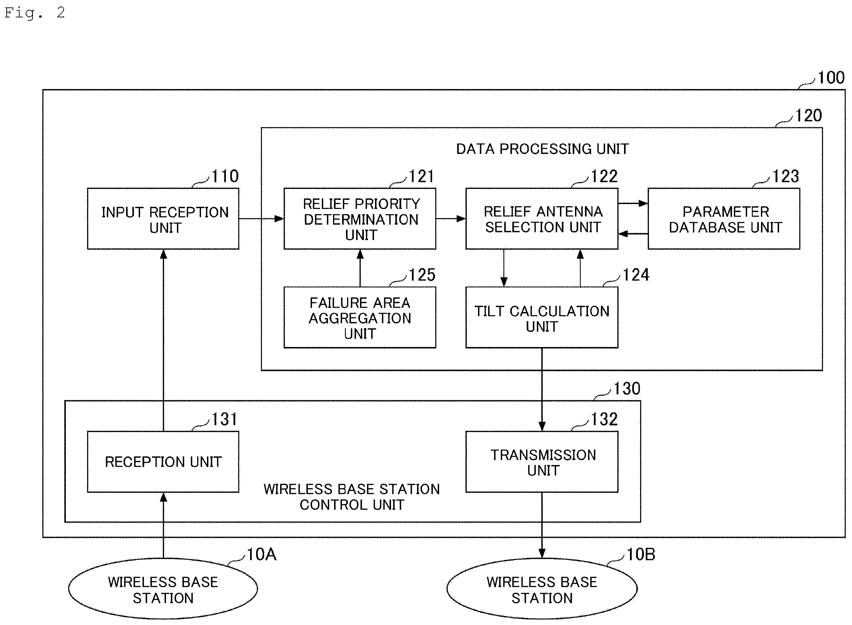

Fig. 2 is a configuration diagram of the wireless base station control apparatus 100 according to the embodiment of the present invention. As shown in Fig. 2, the wireless base station control apparatus 100 includes an input reception unit 110, a data processing unit 120, and a wireless base station control unit 130.

Further, as shown in Fig. 2, the data processing unit 120 includes a relief priority determination unit 121, a relief antenna selection unit 122, a parameter database unit 123, a tilt calculation unit 124, and a failure area aggregation unit 125. The wireless base station control unit 130 includes a reception unit 131 and a transmission unit 132.

The wireless base station control apparatus 100 may be physically a single device or may be physically a system including a plurality of devices. For example, "the input reception unit 110 + the data processing unit 120" may be constituted by one device, and the wireless base station control unit 130 may be constituted by one device. "The input reception unit 110 + the data processing unit 120" or "the data processing unit 120" may be referred to as a control apparatus. The functions of the respective units are as follows.

(Wireless base station control unit 130)

Each of the reception unit 131 and the transmission unit 132 of the wireless base station control unit 130 can communicate with a wireless base station, the reception unit 131 receives information from the wireless base station, and the transmission unit 132 transmits the information to the wireless base station.

<Input Reception Unit 110>

The input reception unit 110 receives "information on each wireless base station", "information on an antenna having trouble in a trouble station (trouble antenna)", and "important area information" from the wireless base station control unit 130.

The "information on each wireless base station" includes, for example, the following information.
- Positions (latitude, longitude), heights, and azimuths of all antennas installed in the wireless base station
- Beam widths in the vertical and horizontal directions of beams of each of the antennas
- A tilt that is set for each of the antennas

The "information on an antenna having trouble in a trouble station (trouble antenna)" includes, for example, the following information. The following "area" is defined as a set of meshes. The following "area covered by a trouble antenna" is defined as a failure area.
- Presence or absence of an important facility in the area covered by the trouble antenna
- The area covered by the trouble antenna (that is, a failure area)
- The center of gravity of the failure area
- The number of active users communicating with the failure antenna
- A total traffic volume processed by the trouble antenna

The "important area information" is as follows.
- A set of local meshes including an important facility and a set of meshes previously designated by an operator are defined as important areas. The information is managed as important area information by embedding flag information indicating an important area in these meshes in advance.

<Failure Area Aggregation Unit 125>

The failure area aggregation unit 125 receives information from the input reception unit 110 and generates a failure area in which adjacent failure areas are aggregated as one failure area. One failure area in which a plurality of failure areas are aggregated may be referred to as an aggregated failure area.

<Relief Priority Determination Unit 121>

The relief priority determination unit 121 receives information from the input reception unit 110 and the failure area aggregation unit 125 and determines the priority of relief of a failure area. The priority of relief is defined based on the property of the failure area. Relief is considered for each failure area from a failure area having a high priority of relief.

<Relief Antenna Selection Unit 122>

The relief antenna selection unit 122 selects a relief antenna from base stations in the vicinity of a failure area to be relieved. A combination optimization algorithm based on DRL is used to select the relief antenna. Specifically, in the present embodiment, a combination optimization algorithm disclosed in Reference 1 "I. Bello et al., "Neural combinatorial optimization with reinforcement learning," arXiv preprint arXiv:1611.09940, 2016." is used.
In this combination optimization algorithm, an agent of reinforcement learning (RL) learns a policy of outputting an optimum element string for maximizing a reward when an input element string is given through learning of training data.
Similarly to the technique disclosed in Reference 1, the relief antenna selection unit 122 uses a pointer network (Reference 2: O. Vinyals et al., "Pointer networks," in NeurIPS, vol. 28, 2015.) as a function representing this policy (policy function).
A selection algorithm of the relief antenna selection unit 122 receives information on candidates of a relief antenna as an input and outputs one or more relief antennas from candidates according to the above-mentioned policy function. Further, in the selection algorithm, parameters of the policy function are previously learned from the training data so that an appropriate antenna is selected. This learning is referred to as pre-learning. The parameters of the policy function are learned such that a reward obtained by an action according to the policy function (here, selection of a permutation of relief antennas) is maximized.
An operation of the system during pre-learning and an operation of the system during operation after the pre-learning will be described later.

<Parameter Database Unit 123>

The parameter database unit 123 manages parameters (specifically, parameters of a policy function, and the like) of an algorithm used in the relief antenna selection unit 122. That is, the parameter database unit 123 stores parameters calculated by the relief antenna selection unit 122 and transmits the stored parameters in response to an inquiry received from the relief antenna selection unit 122.

<Tilt Calculation Unit 124 >

For relief antennas selected by the relief antenna selection unit 122, the tilt calculation unit 124 determines a tilt so that a high cover rate is obtained for a failure area and overlapping of covered areas of the relief antennas is reduced.

A radio wave propagation range estimation algorithm and a tilt calculation algorithm are used to calculate a tilt. In the present embodiment, as these algorithms, an algorithm disclosed in Reference 3 "Masanao Iwamoto, Akito Suzuki, Masahiro Kobayashi, "Antenna tilt control method using particle group optimization for early restoration of failure area," IEICE Technical Report, vol. 121, No. 324, IN2021-24, pp. 1-6, January 2022." However, other radio wave propagation range estimation algorithms and other tilt calculation algorithms may be used.

The tilt calculation unit 124 estimates a radio wave propagation range for each of combinations of the relief antennas and tilts thereof using the radio wave propagation range estimation algorithm disclosed in Reference 3. Specifically, a radio wave propagation range is calculated using geometric approximation of a sector, and a set of meshes included in the calculated range is defined as a covered area corresponding to a combination of the antenna and the tilt.

The tilt calculation unit 124 calculates a combination of tilts so as to cover a failure area for one or more given relief antennas and reduce overlapping of area covers between the relief antennas by using the tilt calculation algorithm disclosed in Reference 3.

Specifically, an objective function with a tilt of each relief antenna as an input is defined, and a combination of tilts for obtaining the best objective function value is adopted as a calculation result. The objective function is defined by combining "a cover rate of a failure area", "a cover rate of an important area (when there is an important area)" and "a covered area size of a relief antenna". The cover rate of the failure area, the cover rate of the important area, and the covered area size of the relief antenna are calculated using a covered area calculated using a radio wave propagation range algorithm.

The tilt calculation unit 124 transmits the determined tilt to the wireless base station control unit 130 to change the tilt of the relief antenna in the wireless base station.

<Specific Operation Example of Tilt Calculation Unit 124>

Hereinafter, a specific operation example of the tilt calculation unit 124 will be described.

First, the tilt calculation unit 124 estimates a radio wave propagation range for each of combinations of relief antennas and tilts. The relief antenna includes a tilt settable range. Within the settable range, a tilt can be changed by a granularity in units of a predetermined angle, for example, in units of 0.5° or 1.0°. A tilt prepared for each unit of a predetermined angle within the settable range is referred to as "each tilt". Then, radio wave propagation ranges are independently estimated for all combinations of the relief antennas and the tilts.

For example, when a settable range of a tilt of a certain relief antenna is 1° to 15°, and a unit of a predetermined angle is 1°, a radio wave propagation range is estimated for each of 15 tilts of (1°, 2°, ...,14°, 15°) by a method to be described later with respect to the relief antenna.

In general, a strict radio wave propagation range is calculated in three dimensions of a latitude, a longitude, and an altitude. However, in order to realize rapid relief, it is necessary to estimate the radio wave propagation range in a shorter period of time. Consequently, in the present embodiment, only a range covered by radio waves at 1.5 m above the ground is considered as a radio wave propagation range. Here, the height is assumed to be 1.5 m above the ground on the assumption that a communication terminal is held in a user's hand, but the height may be other than 1.5 m.

Thereby, although the accuracy of an estimation result is reduced as the radio wave propagation range is not estimated three-dimensionally, it can be expected that performance is improved in terms of a calculation speed.

Further, the tilt calculation unit 124 according to the present embodiment calculates the radio wave propagation range by using geometric approximation of a sector. A specific calculation method is as follows.

Here, the position of a relief antenna is assumed to be (latitude lat, longitude lon), the height of the antenna is assumed to be h, the center azimuth of the antenna is assumed to be $az_{center}$, the tilt of the antenna is assumed to be x, and beam widths (°) of beams of the antenna in the vertical direction and the horizontal direction are assumed to be $\alpha$ and $\beta$, respectively. The height h of the antenna is 1.5 m above the ground.

For a settable range of the tilt x, a minimum value is assumed to be $x_{min}$, and a maximum value is assumed to be $x_{max}$.

At this time, the range of an angle of the beam of the antenna in the vertical direction is assumed to be $[v_{min}, v_{max}]$. $v_{min}$ and $v_{max}$ are obtained by the following formulas, respectively.

$$v_{min} = max\{x - \alpha / 2, x_{min}\}, \quad v_{max} = min\{x + \alpha / 2, x_{max}\}$$

When the radii of two sectors used for approximation of a radio wave propagation range are assumed to be $d_{min}$ and $d_{max}$, the radii are obtained by the following formulas, respectively.

$$d_{min} = h / tan(v_{max}), \quad d_{max} = h / tan(v_{min})$$

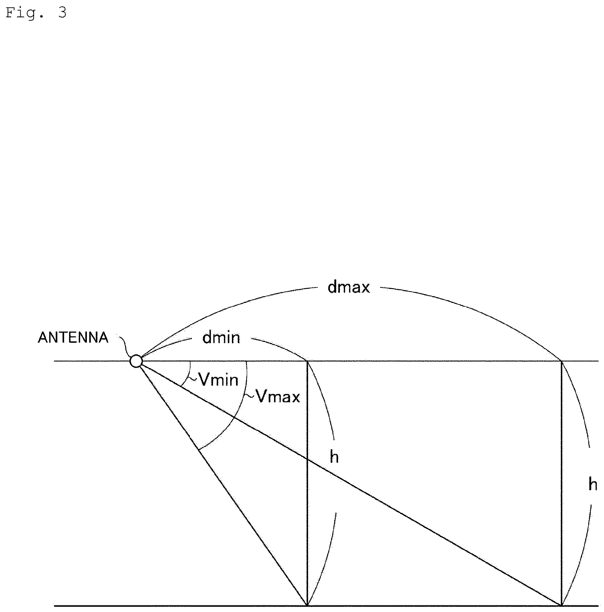

Fig. 3 shows $d_{min}$ and $d_{max}$ obtained by the above formulas.

When a start azimuth angle and an end azimuth angle of the two sectors mentioned above are assumed to be $az_{start}$ and $az_{end}$, respectively, they are obtained by the following formulas.

$$az_{start} = az_{center} + \beta / 2, \quad az_{end} = az_{center} - \beta / 2$$

As described above, the start azimuth angle and the end azimuth angle of the two sectors are the same. Here, definition areas of $az_{start}$ and $az_{end}$ are set to $0 \leq az_{start}, az_{end} < 360°$. When the calculated values of $az_{start}$ and $az_{end}$ are out of the definition areas in accordance with the above-mentioned formulas, a remainder of 360 is used.

A sector of which a center is a point (lat, lon), a radius is $d_{min}$, and a central angle is $az_{start}$-$az_{end}$, and which faces in a direction from $az_{start}$ to $az_{end}$ is assumed to be a sector A. Similarly, a sector of which a center is a point (lat, lon), a radius is $d_{max}$, and a central angle is $az_{start}$-$az_{end}$, and which faces in a direction from $az_{start}$ to $az_{end}$ is assumed to be a sector B.

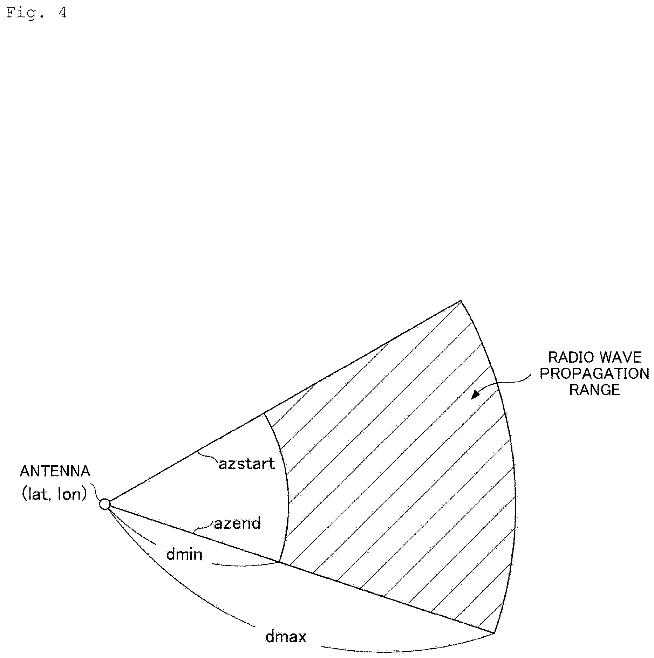

The tilt calculation unit 124 obtains the sector A and the sector B through the above-described calculation, and defines an area that is not included in the sector A among areas included in the sector B as an estimation result of a radio wave propagation range. Fig. 4 shows the sector A and the sector B. Fig. 4 shows two sectors viewed from above.

The tilt calculation unit 124 estimates a radio wave propagation range by performing the above-described calculation for each relief antenna and for each tilt.

Next, a tilt calculation algorithm for calculating a tilt of a relief antenna will be described. The tilt calculation unit 124 calculates a combination of tilts so that a failure area is covered and overlapping of area covers between relief antennas is reduced for each target relief antenna.

Here, an objective function with a tilt of each relief antenna as an input is defined, and a combination of tilts for obtaining the best objective function value is adopted as a calculation result. As described above, the objective function is defined by combining "a cover rate of a failure area", "a cover rate of an important area (when there is an important area)" and "a covered area size of a relief antenna". The cover rate of the failure area, the cover rate of the important area, and the covered area size of the relief antenna are calculated using estimation results of radio wave propagation ranges corresponding to the antennas and the tilts.

However, an upper limit of the number of meshes in a local area is provided for a covered area of each antenna as a restriction, and a tilt is obtained within a range not exceeding the upper limit.

In the following description, a method of calculating a failure area cover rate, an important area cover rate, and a covered area size of a relief antenna is described, and a method of calculating a combination of tilts will be described.

First, a method of calculating a failure area cover rate will be described.

Here, the radio wave propagation range described above is defined as a covered area. An area inherently covered by a relief antenna is defined as a foot area. The foot area may be acquired as base station information, or the tilt calculation unit 124 may estimate the foot area by using the radio wave propagation range estimation method mentioned above. An area in which a failure area and the foot area are combined is defined as a relief target failure area.

The tilt calculation unit 124 compares the covered area with the relief target failure area, calculates a proportion included in the covered area in the relief target failure area, and defines it as a failure area cover rate. The cover rate is calculated by using the number of meshes of a local mesh.

When an area also included in the relief target failure area in the covered area is defined as a relievable failure area, the tilt calculation unit 124 calculates a failure area cover rate by the following formula in a case where meshes are used as described above.

(Failure area cover rate) = (Number of meshes of relievable failure area) / (Number of meshes of relief target failure area)

Subsequently, a method of calculating an important area cover rate will be described.

When there is an important area in a failure area, an area in which the important area and a foot area are combined is defined as a relief target important area.

The tilt calculation unit 124 compares the covered area with the relief target important area, calculates a proportion included in the covered area in the relief target important area, and defines it as an important area cover rate.

That is, when an area also included in the relief target important area in the covered areas is defined as a relievable important area, the tilt calculation unit 124 calculates an important area cover rate by the following formula.

(Important area cover rate) = (Number of meshes of relievable important area) / (Number of meshes of relief target important area)

Next, a method of calculating a covered area size of a relief antenna will be described. As will be described below, the tilt calculation unit 124 calculates a covered area size of each antenna using a ratio of the calculated number of meshes of the covered area to an upper limit of the number of meshes of the covered area.

(Covered area size of antenna) = ((Number of meshes of covered area)) / ((Upper limit of number of meshes of covered area))

The tilt calculation unit 124 calculates this value for each relief antenna, defines an average value as (Covered area size of relief antenna), and uses it as a penalty term of an objective function. Thereby, it is possible to prevent each relief antenna from carelessly extending the covered area in order to improve a cover rate, and to suppress overlapping of covered areas between relief antennas.

Next, a method of calculating a tilt will be described.

First, an objective function is defined as follows.

(Objective function) = $\alpha$(Important area cover rate) + $\beta$(Failure area cover rate) -$\gamma$(Covered area size of relief antenna)

$\alpha$, $\beta$ and $\gamma$ are parameters for weighting respective items and are set in advance. For example, when the priority at the time of relief is "maximization of a cover rate of an important area", "maximization of a cover rate of a failure area (excluding the important area)", and "minimization of overlapping of covered areas", $\alpha > \beta > \gamma$ (for example, $\alpha = 10$, $\beta = 5$, $\gamma = 1$) may be satisfied.

Next, the tilt calculation unit 124 maximizes an objective function by using a particle group optimization method. The particle group optimization method itself is a known technique. Particle group optimization is a meta-heuristic method for obtaining an approximate solution of a combination optimization problem, and a plurality of solution candidates of an optimization problem referred to as particles are prepared, and the particles are updated while sharing each other's objective function values between the particles. Using a particle group optimization method to maximize an objective function is an example.

Here, "a combination of tilts of all relief antennas" corresponds to one particle. When an i-th particle is $x_i$ and a tilt of a j-th relief antenna in $x_i$ is $\theta_{ij}$ ($1 < j < m$), $x_i = [\theta_{i1}, \theta_{i2}, ..., \theta_{im}]$.

In the particle group optimization method, each particle $x_i$ is updated in accordance with the following formula.

Particle update formula:

$$x_i(t + 1) = x_i(t) + v_i(t + 1)$$

Update formula of particle update speed:

$v_i(t + 1) = wv_i(t + 1) + c_1r_1(x_i^p(t) - x_i(t)) + c_2r_2(x^g(t) - x_i(t))$

Here, the meaning of each symbol (variable and the like) is as follows.

$x_i(t)$: Particles at the number of times of update t

$v_i(t)$: Velocity of particles at the number of times of update t

$x_i^p(t)$: Best solution of particle i up to the number of times of update t

$x^g(t)$: Best solution of whole particles up to the number of times of update t

w and c1c2 are coefficients, and r is a random number.

The update is ended when an objective function value does not increase or the number of times of update set in advance is reached. Particles having the maximum objective function value in the whole particles obtained by the update performed so far are adopted as a solution.

In addition to the above-mentioned processing, when covering an important area is given the highest priority, particles having a maximum cover rate of an important area may be adopted among the obtained particles.

(Operation During Pre-learning)

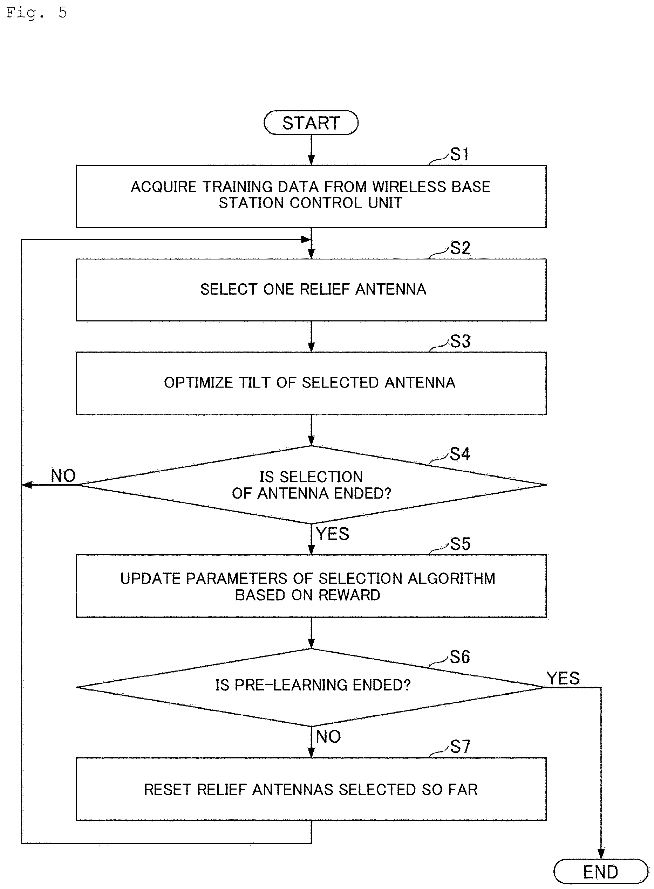

An operation example during pre-learning in the wireless base station control apparatus 100 having the above-described configuration will be described in detail in accordance with a flowchart in Fig. 5. As described above, the wireless base station control apparatus 100 causes parameters of a policy function in a selection algorithm to be learned by pre-learning before relieving a failure area.

<S1>

In S1, the relief antenna selection unit 122 receives an input of training data necessary for pre-learning from the wireless base station control unit 130. The training data includes a "failure area" and "information on candidates of a relief antenna". Here, a set of candidates for the relief antenna is assumed to be N.

More specifically, the relief antenna selection unit 122 receives, as information on N, "the height of an antenna, a distance between the antenna and a center of gravity g of a failure area, and a difference in azimuth angle between the center azimuth of the antenna and a direction from the antenna to the center of gravity g" for antennas n included in N.

Regarding training data, a system operator previously prepares a plurality of failure area generation scenarios and creates training data for each scenario. These pieces of training data are input through the wireless base station control unit 130.

<S2>

In S2, the relief antenna selection unit 122 selects one relief antenna from the set N. That is, the relief antenna selection unit 122 inputs the information on N obtained in S1 to a policy function under parameter learning, and outputs a permutation of N when N is arranged in descending order of the priority of selection as a relief antenna. Then, in a loop of S2 to S4, relief antennas are selected one by one from the head of the permutation.

<S3>

In S3, the tilt calculation unit 124 optimizes tilts of all of the antennas selected in S2 until the present time by using a tilt calculation algorithm. Specifically, the relief antenna selection unit 122 notifies the tilt calculation unit 124 of the selected relief antennas, and the tilt calculation unit 124 optimizes tilts of the relief antennas.

<S4>

In S4, the relief antenna selection unit 122 determines whether to end the selection of an antenna. Here, first, the relief antenna selection unit 122 receives results of the optimization from the tilt calculation unit 124. The results are set to be the tilts of the antennas at the time of optimization, the cover rate of the failure area, and the value of the objective function of optimization.

The relief antenna selection unit 122 ends the selection of an antenna when the cover rate of the failure area at the time of optimization reaches 100% or when all candidates for the relief antennas are selected, the processing proceeds to S5. When the selection of an antenna is not ended, the processing returns to S2 to continue selecting antennas. "The cover rate of the failure area is 100%" is an example. Alternatively, "the cover rate of the failure area is X%" may be used by setting X to a predetermined integer smaller than 100.

<S5>

When the selection of an antenna is ended, the relief antenna selection unit 122 updates, in S5, the parameters of the selection algorithm based on a reward for the antennas selected so far.

The reward is an index for determining "whether the selected antenna is appropriate as a relief antenna". In the present embodiment, the reward is defined as "a value of an objective function of optimization of the tilt calculation unit 124", and the value calculated in S3 is used as a reward. Alternatively, a value other than "the value of the objective function of optimization of the tilt calculation unit 124" may be used as a reward.

Parameter update processing itself in DRL is an existing technique, and for example, a method disclosed in Reference 1 "I. Bello et al., "Neural combinatorial optimization with reinforcement learning," arXiv preprint arXiv:1611.09940, 2016." or a method disclosed in Reference 4 "R. Williams et al., "Simple statistical gradient-following algorithms for connectionist reinforcement learning," Mach. Learn., vol. 8, No. 3-4, p. 229-256, 1992." may be used.

In pre-learning, optimum parameters of a policy function are obtained by repeating selection of a relief antenna and feedback of a reward therefor in accordance with the procedure shown in Fig. 5.

<S6 and S7>

In S6 and S7, the relief antenna selection unit 122 performs end determination processing of pre-learning. Specifically, the end determination processing is as follows.

The relief antenna selection unit 122 sets a flow of S2 to S5 as one learning and counts how many times the learning has been performed. In S6, the relief antenna selection unit 122 determines whether the number of times of learning reaches a preset value or whether update of parameters has been converged, and then ends the learning when any one of the cases is applied.

When the learning is ended, the relief antenna selection unit 122 stores the parameters obtained by the learning in the parameter database unit 123.

When the learning is not ended, the selected antennas are reset, and the processing returns to S2 to continue the learning.

(Operation After Pre-learning)

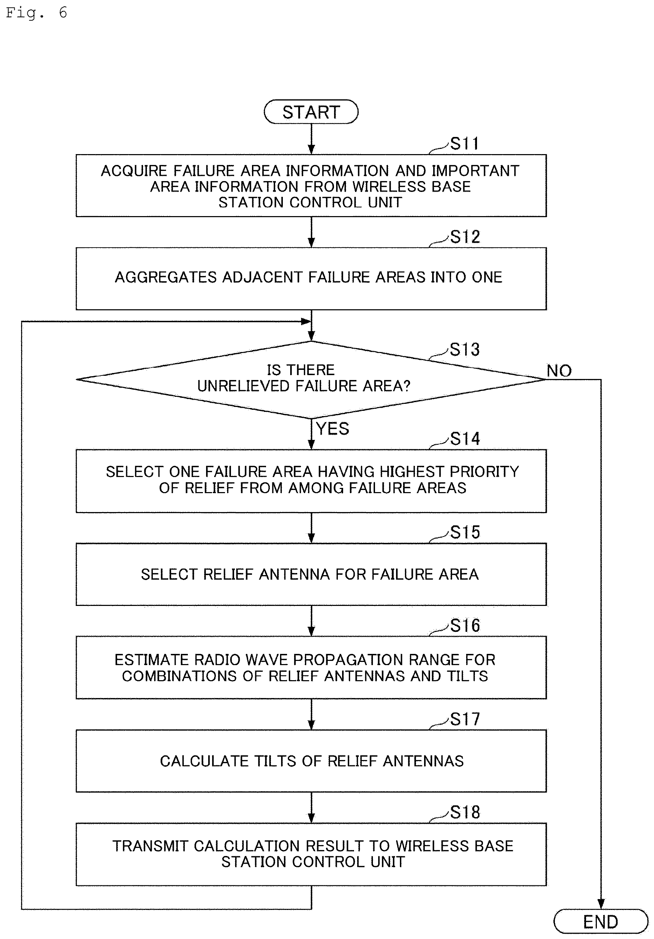

An operation example when the pre-learning of the selection algorithm is ended and a failure area is relieved will be described in detail in accordance with a procedure of a flowchart in Fig. 6.

<S11>

In S11, the failure area aggregation unit 125 receives an input of information necessary for relief from the wireless base station control unit 130. The information necessary for relief is failure area information, important area information, information on relief antenna candidates, and the like.

<S12>

In S12, the failure area aggregation unit 125 aggregates adjacent failure areas into one. That is, the failure area aggregation unit 125 re-defines the failure areas as a single failure area by combining the adjacent areas. Upper limits may be set for the number of areas to be collected and the sizes of the areas.

At this time, the failure area aggregation unit 125 adds up the number of active users who have communicated and a total traffic volume which has been processed, and aggregates information into one failure area.

<13, S14>

When there are a plurality of failure areas subjected to the processing of S12, the relief priority determination unit 121 sets the priority of relief and performs relief on failure areas one by one in descending order of the priority of relief.

In S13, the relief priority determination unit 121 confirms whether there is an unrelieved failure area, and ends the processing when there is no unrelieved failure area. When there is an unrelieved failure area, the processing proceeds to S14, and the relief priority determination unit 121 determines the priority of relief of each unrelieved failure area and selects one failure area having the highest priority of relief among the unrelieved failure areas.

Although a method of determining the priority of relief of each failure area by the relief priority determination unit 121 is not limited to a specific method, the priority of relief can be determined based on indexes according to emergency of communication establishment such as "the presence or absence of an important facility in a failure area", "the size of an important area in the failure area", "the size of the failure area", "the number of active users communicating with a failure antenna associated with the failure area", and "a total traffic volume processed by the failure antenna associated with the failure area". Specific indexes may be appropriately determined by the operator of the system.

For example, when the relief priority determination unit 121 determines the priority of relief based on "the number of active users communicating with a failure antenna", the higher the priority of relief is set as the larger number of active users is. The relief priority determination unit 121 may determine the priority of relief by using any one of "the presence or absence of an important facility in a failure area", "the size of an important area in the failure area", "the size of the failure area", "the number of active users communicating with a failure antenna associated with the failure area", and "a total traffic volume processed by the failure antenna associated with the failure area", or may determine the priority of relief by using any two or more of them.

<S15>

In S15, the relief antenna selection unit 122 selects a relief antenna for a failure area from candidates by using a policy function in which parameters are optimized by pre-learning. Although a procedure of selecting the relief antenna is the same as a selection procedure during the pre-learning, the calculation of a reward and updating of the parameters are not performed. However, the calculation of a reward and the updating of parameters may be performed even in a phase of the actual selection of a relief antenna after the pre-learning. A specific procedure of S15 is as follows.

The relief antenna selection unit 122 inputs information of a candidate N of the relief antenna to the policy function, and the policy function outputs a certain permutation of the candidates for the relief antenna. This permutation is a column in which relief antenna candidates are arranged in descending order of priority from the head.

However, this permutation may be a column in which relief antenna candidates are arranged in ascending order of priority from the head. In this case, the following selection of a relief antenna is performed from the end of the column. The same is true of pre-learning.

"Arranging relief antenna candidates in ascending order of priority from the head and selecting a relief antenna from the end of the column" and "arranging relief antenna candidates in descending order of priority from the head and selecting a relief antenna from the head of the column" are the same.

As the information on N, for antennas n included in N, a height $h_n$ of an antenna, a distance $d_n$ between the antenna and a center of gravity g of a failure area, and a difference $\delta_n$ in azimuth angle between the center azimuth of the antenna and a direction from the antenna to the center of gravity g are used. By selecting a relief antenna based on such information, an appropriate relief antenna can be selected for various types of arrangement of relief antennas and failure patterns.

The relief antenna selection unit 122 selects relief antennas one by one from the head of the above-mentioned permutation.

Each time one relief antenna is selected, the relief antenna selection unit 122 calculates a cover rate of a failure area when optimizing tilts of all of the relief antennas selected so far by using a tilt calculation algorithm.

When the cover rate of the failure area reaches 100% or all candidates for the relief antenna are selected, the relief antenna selection unit 122 ends the selection of a relief antenna and outputs all of the relief antennas selected so far. "The cover rate of the failure area is 100%" is an example. Alternatively, "the cover rate of the failure area is X%" may be used by setting X to a predetermined integer smaller than 100.

In the selection algorithm according to the present embodiment, since all antennas around a failure area are not used as relief antennas, but the relief antennas are narrowed down, and thus it is possible to prevent the accuracy of a solution of tilt optimization from being lowered due to excessive relief antennas. As a result, it is possible to prevent covered areas of the relief antennas from overlapping each other.

Further, since a combination optimization algorithm (Reference 1) based on DRL is used as a selection algorithm, an appropriate relief antenna can be obtained in a practical period of time for an unknown "failure area" and "candidates for relief antennas located around the failure area".

<S16>

In S16, the tilt calculation unit 124 estimates a radio wave propagation range in each relief antenna candidate and each tilt based on a radio wave propagation range estimation algorithm.

<S17>

In S17, the tilt calculation unit 124 calculates a tilt of each relief antenna. Here, an appropriate tilt is obtained based on a tilt calculation algorithm by using the radio wave propagation range obtained in S16.

<S18>

In S18, the tilt calculation unit 124 ends relief of a failure area being currently relieved and transmits information of "each relief antenna and tilt" to the wireless base station control unit 130. Then, the processing returns to S13.

(Hardware Configuration Example)

The wireless base station control apparatus (or the control apparatus) in the present embodiment can be realized by, for example, causing a computer to execute a program describing details of processing described in the present embodiment.

The "computer" may be a physical machine or a virtual machine in a cloud. When using a virtual machine, the "hardware" described here is virtual hardware.

The program can be stored and distributed by being recorded in a computer-readable recording medium (portable memory or the like). In addition, the above-described program can also be provided through a network such as the Internet or e-mail.

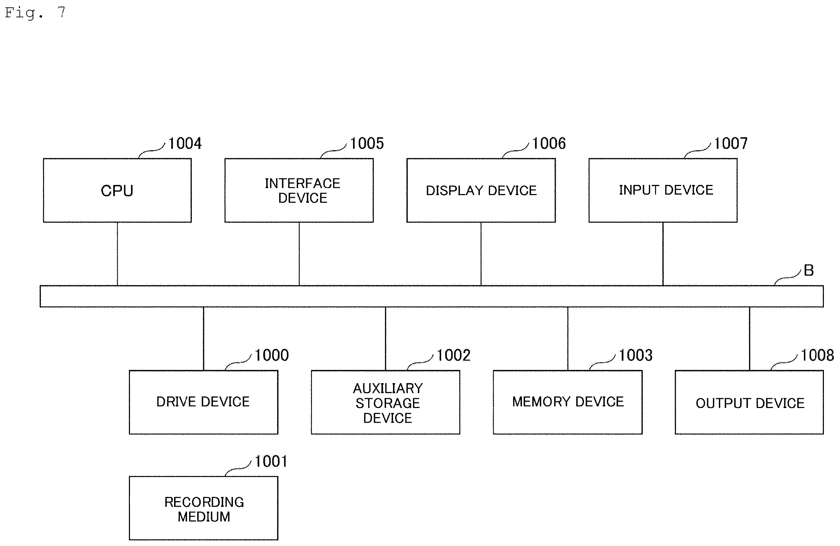

Fig. 7 is a diagram showing an example of a hardware configuration of the computer. The computer of Fig. 7 includes a drive device 1000, an auxiliary storage device 1002, a memory device 1003, a CPU 1004, an interface device 1005, a display device 1006, an input device 1007, an output device 1008, and the like which are connected to each other via a bus BS.

The program for implementing processing in the computer is provided by, for example, a recording medium 1001, such as a CD-ROM or a memory card. When the recording medium 1001 which stores the program is set in the drive device 1000, the program is installed in the auxiliary storage device 1002 from the recording medium 1001 via the drive device 1000. However, the program need not necessarily be installed from the recording medium 1001 and may be downloaded from another computer via a network. The auxiliary storage device 1002 stores the installed program and also stores necessary files, data, and the like.

The memory device 1003 reads and stores the program from the auxiliary storage device 1002 when an instruction to start the program is given. The CPU 1004 realizes functions related to the wireless base station control apparatus 100 in accordance with a program stored in the memory device 1003. The interface device 1005 is used as an interface for connecting to a network. The display device 1006 displays a graphical user interface (GUI) or the like according to the program. The input device 1007 is composed of a keyboard, a mouse, buttons, a touch panel, and the like and is used for inputting various operation instructions. The output device 1008 outputs a calculation result.

(Effects of Embodiment)

According to the technique of the present embodiment described above, when a failure area occurs due to trouble or the like of a wireless base station, it is possible to select an appropriate relief antenna according to a situation.

(Appendix)

This specification describes at least a control method, a control apparatus, a wireless communication system, and a program described in the following clauses.

(Appendix Clause 1)

A control method executed by a control apparatus that determines a relief antenna for relieving communication in a failure area and a tilt of the relief antenna, the control method including:

acquiring an antenna sequence in which a plurality of antennas are arranged in descending order of priority in accordance with a policy function, and selecting the antennas as relief antennas in order from a head of the antenna sequence until a predetermined condition is satisfied; and
calculating tilts of the relief antennas selected in the selecting of the relief antennas.

(Appendix Clause 2)

The control method according to appendix clause **1,** wherein, when pre-learning of the policy function is performed using training data, the control apparatus
acquires an antenna sequence in which a plurality of antennas are arranged in descending order of priority in accordance with the policy function, selects the antennas as relief antennas in order from a head of the antenna sequence until a predetermined condition is satisfied, and updates parameters of the policy function based on a reward obtained when all of the selected relief antennas are used.

(Appendix Clause 3)

The control method according to appendix clause 1 or 2, wherein
the predetermined condition is that a cover rate of a failure area is 100% or all of the antennas are selected from the antenna sequence.

(Appendix Clause 4)

The control method according to any one of appendix clauses 1 to 3, wherein
the policy function has, for each antenna in a set of antennas that are candidates for a relief antenna, a height of the antenna, a distance between the antenna and a center of gravity of a failure area, and a difference in azimuth angle between a center azimuth of the antenna and a direction from the antenna to the center of gravity as inputs, and outputs the antenna sequence.

(Appendix Clause 5)

A control apparatus that determines a relief antenna for relieving communication in a failure area and a tilt of the relief antenna, the control apparatus including:

a relief antenna selection unit configured to acquire an antenna sequence in which a plurality of antennas are arranged in descending order of priority in accordance with a policy function, and select the antennas as relief antennas in order from a head of the antenna sequence until a predetermined condition is satisfied; and
a tilt calculation unit configured to calculate tilts of the relief antennas selected by the relief antenna selection unit.

(Appendix Clause 6)

A wireless communication system including:

a control apparatus that determines a relief antenna for relieving communication in a failure area and a tilt of the relief antenna; and
one or more wireless base stations,
wherein
the control apparatus includes
a relief antenna selection unit configured to acquire an antenna sequence in which a plurality of antennas are arranged in descending order of priority in accordance with a policy function, and select the antennas as relief antennas in order from a head of the antenna sequence until a predetermined condition is satisfied, and
a tilt calculation unit configured to calculate tilts of the relief antennas selected by the relief antenna selection unit.

(Appendix Clause 7)

A program causing a computer to function as each unit of the control apparatus according to appendix clause 5.
Although the embodiments have been described above, the present invention is not limited to such specific embodiments, and various modifications and changes can be made within the scope of the gist of the present invention described in the claims.

Reference Signs List

| | |
|---|---|
| 10 | Wireless base station |
| 100 | Wireless base station control apparatus |
| 110 | Input reception unit |
| 120 | Data processing unit |
| 121 | Relief priority determination unit |
| 122 | Relief antenna selection unit |
| 123 | Parameter database unit |
| 124 | Tilt calculation unit |
| 125 | Failure area aggregation unit |
| 130 | Wireless base station control unit |
| 131 | Reception unit |
| 132 | Transmission unit |
| 1000 | Drive device |
| 1001 | Recording medium |
| 1002 | Auxiliary storage device |

1003    Memory device
1004    CPU
1005    Interface device
1006    Display device
1007    Input device
1008    Output device

**Claims**

1.  A control method executed by a control apparatus that determines a relief antenna for relieving communication in a failure area and a tilt of the relief antenna, the control method comprising:

    acquiring an antenna sequence in which a plurality of antennas are arranged in descending order of priority in accordance with a policy function, and selecting the antennas as relief antennas in order from a head of the antenna sequence until a predetermined condition is satisfied; and
    calculating tilts of the relief antennas selected in the selecting of the relief antennas.

2.  The control method according to claim 1, wherein, when pre-learning of the policy function is performed using training data, the control apparatus
    acquires an antenna sequence in which a plurality of antennas are arranged in descending order of priority in accordance with the policy function, selects the antennas as relief antennas in order from a head of the antenna sequence until a predetermined condition is satisfied, and updates parameters of the policy function based on a reward obtained when all of the selected relief antennas are used.

3.  The control method according to claim 1, wherein the predetermined condition is that a cover rate of a failure area is 100% or all of the antennas are selected from the antenna sequence.

4.  The control method according to any one of claims 1 to 3, wherein
    the policy function has, for each antenna in a set of antennas that are candidates for a relief antenna, a height of the antenna, a distance between the antenna and a center of gravity of a failure area, and a difference in azimuth angle between a center azimuth of the antenna and a direction from the antenna to the center of gravity as inputs, and outputs the antenna sequence.

5.  A control apparatus that determines a relief antenna for relieving communication in a failure area and a tilt of the relief antenna, the control apparatus comprising:

    a relief antenna selection unit configured to acquire an antenna sequence in which a plurality of antennas are arranged in descending order of priority in accordance with a policy function, and select the antennas as relief antennas in order from a head of the antenna sequence until a predetermined condition is satisfied; and
    a tilt calculation unit configured to calculate tilts of the relief antennas selected by the relief antenna selection unit.

6.  A wireless communication system comprising:

    a control apparatus that determines a relief antenna for relieving communication in a failure area and a tilt of the relief antenna; and
    one or more wireless base stations,
    wherein
    the control apparatus includes
    a relief antenna selection unit configured to acquire an antenna sequence in which a plurality of antennas are arranged in descending order of priority in accordance with a policy function, and select the antennas as relief antennas in order
    from a head of the antenna sequence until a predetermined condition is satisfied, and
    a tilt calculation unit configured to calculate tilts of the relief antennas selected by the relief antenna selection unit.

7.  A program causing a computer to function as each unit of the control apparatus according to claim 5.

Fig. 1

Fig. 2

Fig. 3

Fig. 4

ANTENNA
(lat, lon)

azstart

azend

dmin

dmax

RADIO WAVE
PROPAGATION
RANGE

Fig. 5

```
                        ( START )
                            │
                            ▼                        ╭─S1
        ┌───────────────────────────────────────────┐
        │  ACQUIRE TRAINING DATA FROM WIRELESS BASE  │
        │          STATION CONTROL UNIT              │
        └───────────────────────────────────────────┘
                            │
    ┌──────────────────────▶│                        ╭─S2
    │   ┌───────────────────────────────────────────┐
    │   │         SELECT ONE RELIEF ANTENNA          │
    │   └───────────────────────────────────────────┘
    │                       │
    │                       ▼                        ╭─S3
    │   ┌───────────────────────────────────────────┐
    │   │       OPTIMIZE TILT OF SELECTED ANTENNA    │
    │   └───────────────────────────────────────────┘
    │                       │
    │                       ▼                        ╭─S4
    │   NO        ◇ IS SELECTION OF ANTENNA ENDED? ◇
    │◀────────────                                    
    │                       │ YES
    │                       ▼                        ╭─S5
    │   ┌───────────────────────────────────────────┐
    │   │  UPDATE PARAMETERS OF SELECTION ALGORITHM  │
    │   │            BASED ON REWARD                 │
    │   └───────────────────────────────────────────┘
    │                       │
    │                       ▼                        ╭─S6
    │       ◇ IS PRE-LEARNING ENDED? ◇ ──── YES
    │                       │ NO                │
    │                       ▼          ╭─S7      │
    │   ┌───────────────────────────────────────┐ │
    │   │   RESET RELIEF ANTENNAS SELECTED SO FAR│ │
    │   └───────────────────────────────────────┘ │
    │                       │                     │
    └───────────────────────┘                     ▼
                                               ( END )
```

Fig. 6

```
                        ( START )
                            │
                            ▼                        ⌐S11
    ┌───────────────────────────────────────────────────┐
    │   ACQUIRE FAILURE AREA INFORMATION AND IMPORTANT   │
    │      AREA INFORMATION FROM WIRELESS BASE           │
    │              STATION CONTROL UNIT                  │
    └───────────────────────────────────────────────────┘
                            │
                            ▼                        ⌐S12
    ┌───────────────────────────────────────────────────┐
    │       AGGREGATES ADJACENT FAILURE AREAS INTO ONE   │
    └───────────────────────────────────────────────────┘
                            │
          ┌─────────────────┤
          │                 ▼                      ⌐S13
          │            ◇ IS THERE ◇ ──────────────── NO ──┐
          │          UNRELIEVED FAILURE AREA?             │
          │                 │ YES                         │
          │                 ▼                      ⌐S14   │
          │  ┌──────────────────────────────────────────┐│
          │  │ SELECT ONE FAILURE AREA HAVING HIGHEST    ││
          │  │ PRIORITY OF RELIEF FROM AMONG FAILURE     ││
          │  │ AREAS                                     ││
          │  └──────────────────────────────────────────┘│
          │                 │                      ⌐S15   │
          │  ┌──────────────────────────────────────────┐│
          │  │    SELECT RELIEF ANTENNA FOR FAILURE AREA ││
          │  └──────────────────────────────────────────┘│
          │                 │                      ⌐S16   │
          │  ┌──────────────────────────────────────────┐│
          │  │ ESTIMATE RADIO WAVE PROPAGATION RANGE FOR ││
          │  │ COMBINATIONS OF RELIEF ANTENNAS AND TILTS ││
          │  └──────────────────────────────────────────┘│
          │                 │                      ⌐S17   │
          │  ┌──────────────────────────────────────────┐│
          │  │     CALCULATE TILTS OF RELIEF ANTENNAS    ││
          │  └──────────────────────────────────────────┘│
          │                 │                      ⌐S18   │
          │  ┌──────────────────────────────────────────┐│
          │  │  TRANSMIT CALCULATION RESULT TO WIRELESS  ││
          │  │       BASE STATION CONTROL UNIT           ││
          │  └──────────────────────────────────────────┘│
          │                 │                             │
          └─────────────────┘                            ▼
                                                     ( END )
```

Fig. 7

## INTERNATIONAL SEARCH REPORT

| International application No. |
|---|
| **PCT/JP2022/030017** |

| A. | CLASSIFICATION OF SUBJECT MATTER |
|---|---|

*H04W 24/04*(2009.01)i; *H04W 16/18*(2009.01)i
FI: H04W24/04; H04W16/18 110

According to International Patent Classification (IPC) or to both national classification and IPC

| B. | FIELDS SEARCHED |
|---|---|

Minimum documentation searched (classification system followed by classification symbols)

H04W24/04; H04W16/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2012-16015 A (FUJITSU LTD) 19 January 2012 (2012-01-19)<br>paragraphs [0007], [0054]-[0074], fig. 5-6 | 1-7 |
| A | LI, Wenjing et al. Automated Cell Outage Compensation Mechanism Based on Downtilt Adjustments in Cellular Networks. ISCIT. 2016, entire text<br>in particular, sections II, III | 1-7 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

| | International application No. |
|---|---|
| | **PCT/JP2022/030017** |

| Patent document cited in search report | Publication date (day/month/year) | Patent family member(s) | Publication date (day/month/year) |
|---|---|---|---|
| JP       2012-16015      A | 19 January 2012 | US       2012/0004001      A1<br>paragraphs [0006], [0057]-[0077], fig. 5-6<br>GB       2481614      A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. LI et al.** Automated cell outage compensation mechanism based on downtilt adjustments in cellular networks. *ISCIT*, 2016, 1-6
- **M. YIN et al.** Cell outage compensation based on CoMP and optimization of tilt. *J. China Univ. Posts Telecommun.*, 2015, vol. 22 (5), 71-79
- **I. BELLO et al.** Neural combinatorial optimization with reinforcement learning. *arXiv:1611.09940*, 2016
- **O. VINYALS et al.** Pointer networks. *NeurIPS*, 2015, vol. 28
- **MASANAO IWAMOTO ; AKITO SUZUKI ; MASA-HIRO KOBAYASHI**. Antenna tilt control method using particle group optimization for early restoration of failure area. *IEICE Technical Report*, January 2022, vol. 121 (324), 1-6
- **R. WILLIAMS et al.** Simple statistical gradient-following algorithms for connectionist reinforcement learning. *Mach. Learn.*, 1992, vol. 8 (3-4), 229-256